# EUROPEAN PATENT SPECIFICATION

(11) **EP 3 817 429 B1**
(45) Date of publication and mention of the grant of the patent: **08.06.2022**
(21) Application number: 18924556.6
(22) Date of filing: 28.06.2018
(51) Int. Cl.: H04B 7/0404, H04B 7/06, H04B 7/08, H04W 72/12, H04W 16/28, H04L 27/26, H04L 5/00, H04W 52/02, H04W 72/04

(54) **USER TERMINAL**
BENUTZERENDGERÄT
TERMINAL D'UTILISATEUR

(43) Date of publication of application: 05.05.2021
(73) Proprietor: NTT DOCOMO, INC., Chiyoda-ku Tokyo 100-6150 (JP)
(72) Inventor: KAKISHIMA, Yuichi, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2018/024736
(87) International publication number: WO 2020/003473

(56) References cited:
- EP-A1- 3 242 514
- JP-A- 2016 219 896
- US-A1- 2017 048 908
- QUALCOMM: "Tagging and indication of DL beams", 3GPP TSG RAN WG1 #90 R1-1713400, 12 August 2017 (2017-08-12), XP051530911,
- ERICSSON: "Beam management in C-DRX", 3GPP TSG RAN WG1 #90 R1-1714296, 12 August 2017 (2017-08-12), XP051317082,

## Description

### Technical Field

The present disclosure relates to a user terminal.

### Background Art

Long Term Evolution (LTE) has been specified for achieving a higher data rate, lower latency, and the like in a Universal Mobile Telecommunications System (UMTS) network (see Non-Patent Literature (hereinafter referred to as "NPL") 1). Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio Access Technology (New-RAT; NR)), and the like.

Dynamically multiplexing a reference signal and the like using a control signal has been studied for the future radio system (NPL 2). PL 1 relates to a user terminal supporting D2D communication. PL 2 relates to control information transmission method, and an apparatus.

### Citation List

### Patent Literature

PL1 : US 2017/0048908
PL 2 : EP 3 242 514 A1

### Non-Patent Literature

NPL 1
   3GPP TS 36.300 v13.4.0, "Evolved Universal Terrestrial Radio Access (E-UTRA) and Evolved Universal Terrestrial Radio Access Network (E-UTRAN); Overall description; Stage 2 (Release 13)," June 2016
NPL 2
   3GPP TS 38.214 V15.1.0, "Physical layer procedures for data (Release 15)," March 2018

### Summary of Invention

### Technical Problem

However, the study of the operation of the user terminal in the case of dynamically multiplexing the reference signal using the control signal is not sufficient.

An object of the disclosure is to provide a user terminal that appropriately operates in the case of dynamically multiplexing the reference signal and the like using the control signal.

### Solution to Problem

A user terminal according to independent claim 1. Preferred embodiments are defined in dependent claims 2-5.

### Advantageous Effects of Invention

The disclosure allows the user terminal to operate appropriately in the case of dynamically multiplexing the reference signal and the like using the control signal.

### Brief Description of Drawings

FIG. 1 illustrates an exemplary configuration of a radio communication system according to an embodiment of the invention;
FIG. 2 illustrates an exemplary configuration of a transmitter according to an embodiment of the invention;
FIG. 3 illustrates an exemplary configuration of a receiver according to an embodiment of the invention;
FIG. 4 illustrates A-CSI-RS (Aperiodic Channel State Information-Reference Signals);
FIG. 5 illustrates beam management;
FIG. 6 illustrates procedures for beam management;
FIG. 7 illustrates antenna panels;
FIG. 8 illustrates a case where the number of antenna panels allowed to be simultaneously ON;
FIG. 9 illustrates an A-CSI-RS measurement window; and
FIG. 10 illustrates an exemplary hardware configuration of the radio base station and the user terminal according to the disclosure.

### Description of Embodiments

### (One Embodiment)

Hereinafter, an embodiment of the disclosure will be described with reference to the accompanying drawings.

### <Configuration of Radio Communication System>

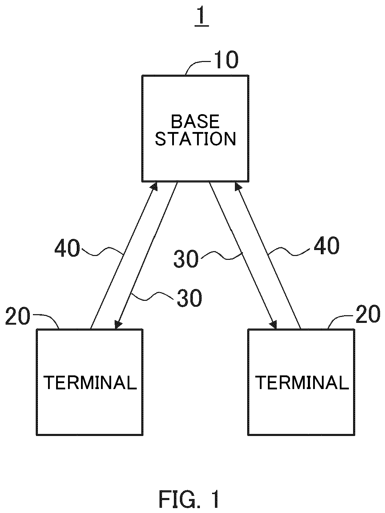

FIG. 1 illustrates an exemplary configuration of a radio communication system according to an embodiment of the invention.

As illustrated in FIG. 1, the radio communication system 1 includes radio base station (hereinafter referred to as "base station") 10, and user terminal (hereinafter referred to as "terminal") 20. Terminal 20 is connected to base station 10.

Base station 10 transmits DL (Downlink) signal 30 to terminal 20. DL signal 30 includes, for example, a DL data signal (for example, a PDSCH (Physical Downlink Shared Channel) signal), and a DL control signal (for example, a PDCCH (Physical Downlink Control Channel) signal).

Terminal 20 transmits UL (Uplink) signal 40 to base station 10. UL signal 40 includes, for example, a UL data signal (for example, a PUSCH (Physical Uplink Shared Channel) signal), and a UL control signal (for example, a PUCCH (Physical Uplink Control Channel) signal).

### <Configuration of Transmitter>

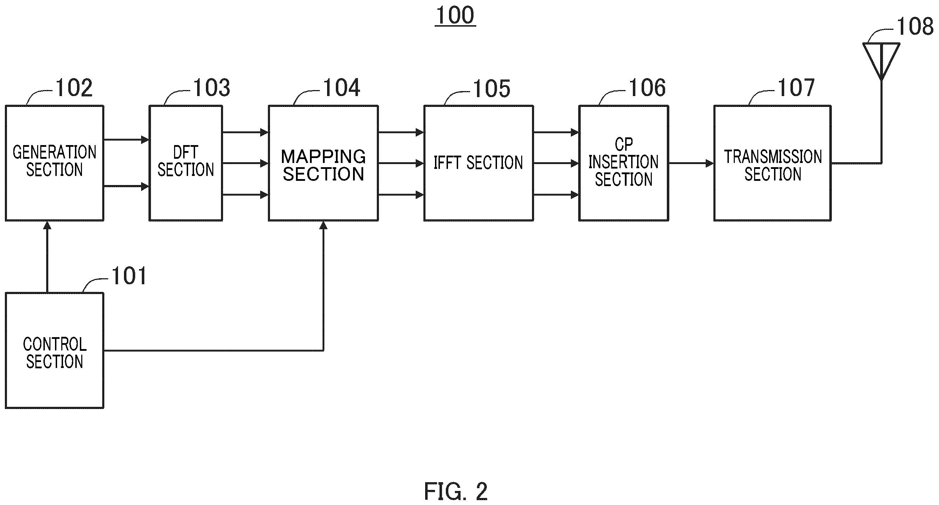

FIG. 2 illustrates an exemplary configuration of a transmitter according to an embodiment of the invention. Transmitter 100 of base station 10 transmits DL signal 30. Transmitter 100 of terminal 20 transmits UL signal 40.

Transmitter 100 illustrated in FIG. 2 includes control section 101, generation section 102, DFT (Discrete Fourier Transform) section 103, mapping section 104, IFFT (Inverse Fast Fourier Transform) section 105, CP (Cyclic Prefix) insertion section 106, transmission section 107, and antenna 108. Note that an OFDM (Orthogonal Frequency Division Multiplexing) symbol is generated by DFT section 103, mapping section 104, IFFT section 105, and CP insertion section 106.

Control section 101 controls generation section 102 and mapping section 104. For example, control section 101 in transmitter 100 of base station 10 performs scheduling of each terminal 20 (resource assignment or the like), and control generation section 102 and mapping section 104 based on the scheduling.

Based on the control by control section 101, generation section 102 assigns a signal to be transmitted to receiver 200, to the time domain of a wireless resource, generates time domain signals, and outputs the generated time domain signals to DFT section 103.

DFT section 103 performs the discrete Fourier transform on the time domain signals converted from serial to parallel form, and outputs resulting frequency domain signals to mapping section 104.

Based on the control by control section 101, mapping section 104 maps the frequency domain signals output from DFT section 103 to a plurality of subcarriers, maps zero to subcarriers other than the subcarriers to which the frequency domain signals are mapped. Mapping section 104 then outputs the mapped frequency domain signals to IFFT section 105.

IFFT section 105 performs the inverse fast Fourier transform on the frequency domain signals output from mapping section 104, and outputs resulting time domain signals to CP insertion section 106.

CP insertion section 106 inserts a CP to the time domain signals output from IFFT section 105, and outputs resulting signals to transmission section 107.

Transmission section 107 performs Radio Frequency (RF) processing, such as Digital-to-Analog (D/A) conversion, upconversion, amplification, and the like on the time domain signals output from CP insertion section 106, and transmits radio signals to receiver 200 via antenna 108.

### <Configuration of Receiver>

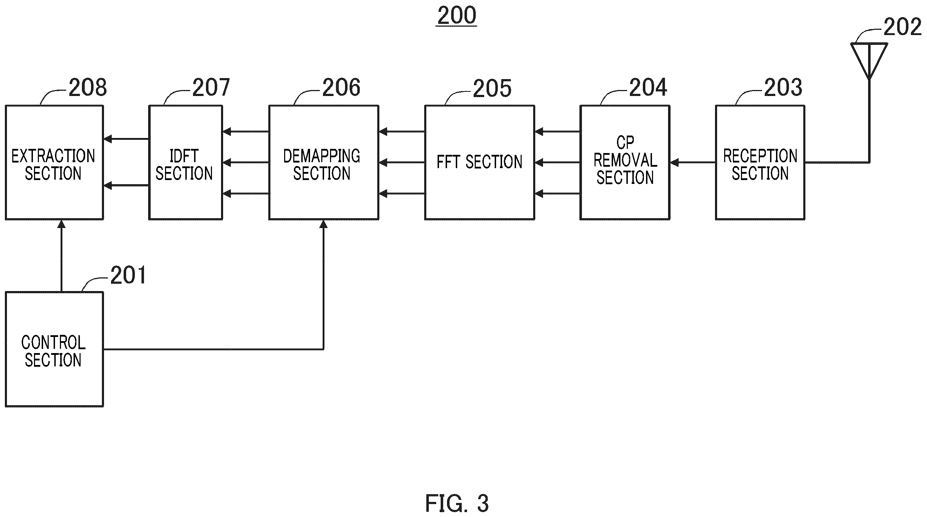

FIG. 3 illustrates an exemplary configuration of a receiver according to an embodiment of the invention. Receiver 200 of terminal 20 receives DL signal 30. Receiver 200 of base station 10 receives UL signal 40.

Receiver 200 illustrated in FIG. 3 includes control section 201, antenna 202, reception section 203, CP removal section 204, FFT (Fast Fourier Transform) section 205, demapping section 206, IDFT (Inverse Discrete Fourier Transform) section 207, and extraction section 208. Note that an OFDM symbol is extracted by CP removal section 204, FFT section 205, demapping section 206, and IDFT section 207.

Control section 201 controls demapping section 206 and extraction section 208.

A radio signal received by antenna 202 is input to reception section 203. Reception section 203 performs RF processing, such as amplification, downconversion, Analog-to-Digital (A/D) conversion, on the radio signal received by antenna 202, and outputs a baseband time domain signal to CP removal section 204.

CP removal section 204 removes the CP of the time domain signal output from reception section 203, and outputs the signal to FFT section 205.

FFT section 205 performs the fast Fourier transform on the time domain signal output from CP removal section 204, and outputs a resulting frequency domain signal to demapping section 206.

Based on the control by control section 201, demapping section 206 selects a target subcarrier for the signal output from FFT section 205, punctures unnecessary subcarriers, and outputs a frequency domain signal to IDFT section 207.

IDFT section 207 performs the inverse discrete Fourier transform on the frequency domain signal output from demapping section 206, and obtains a time domain signal. IDFT section 207 outputs this time domain signal to extraction section 208.

Extraction section 208 extracts the required signal from the time domain signal, based on control by the control section 201.

### <Aperiodic CSI-RS>

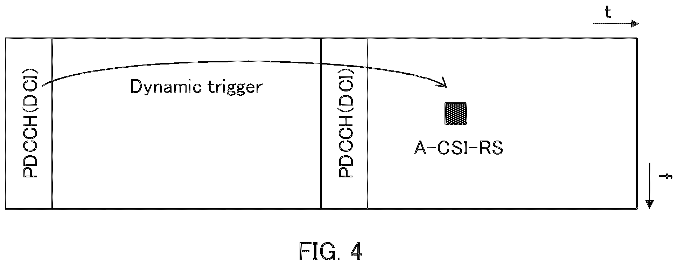

Referring to FIG. 4, Aperiodic CSI-RS (A-CSI-RS), which is an example of a reference signal, is described.

In NR, CSI-RS is supported for CSI measurement on the DL signal. NPL 2 discloses dynamic control of CSI-RS multiplexing using a PDCCH signal (DCI(Downlink Control Information)), which is an example of the control signal. As described above, CSI-RS, on which multiplexing is dynamically controlled by the PDCCH signal (DCI), is called Aperiodic CSI-RS (A-CSI-RS).

For example, as illustrated in FIG. 4, the presence or absence of mapping of A-CSI-RS, and the multiplexing destination (mapping destination) is indicated by DCI. The indication of the A-CSI-RS mapping destination by the DCI may be called dynamic trigger.

The DCI includes information related to a transmission beam (hereinafter referred to as "transmission beam information") applied to CSI-RS. Terminal 20 may determine a reception beam based on the transmission beam information.

### <Beam Management>

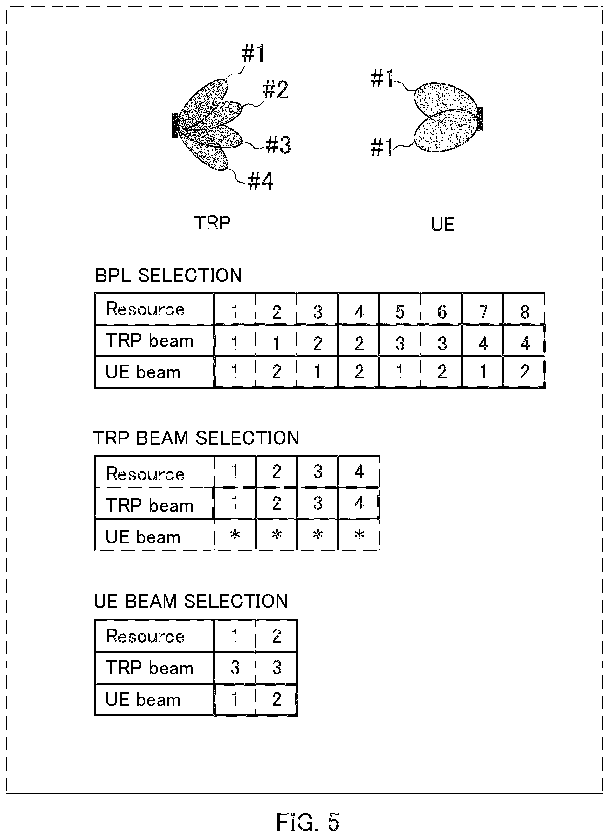

Referring to FIG. 5, beam management is described. The beam management determines a transmission beam of base station 10 and/or a reception beam of terminal 20.

To determine the transmission and reception beams of DL signals and the transmission and reception beams of UL signals, an SSB (Synchronization Signal Block) and/or CSI-RS based on L1 (Layer 1) and/or L2 (Layer 2) procedures are used.

The beam management includes functions of beam management, beam reporting, and beam indication. Note that the beam may be selected based on L1-RSRP (Reference Signals Received Power), L1-RSRQ (Reference Signal Received Power) and RSSI (Received Signal Strength Indicator).

The beam management may select at least one of a pair (Beam Pair Link (BPL)) of TRB (Transmission reception Point) beams #1 to #4 of base station 10 and UE (User Equipment) beams #1 and #2 of terminal 20, which are indicated in "BPL selection" illustrated in FIG. 5.

Alternatively, the beam management may select a TRP beam from among TRP beams #1 to #4 of base station 10 indicated in "TRP selection" in FIG. 5. In this case, terminal 20 may select one UE beam (see symbols "^{∗}" in FIG. 5) based on the previous measured value.

Alternatively, the beam management may select one UE beam optimal for the TRP beam selected by base station 10, from among UE beams #1 and #2 of terminal 20 indicated in "UE beam selection" in FIG. 5.

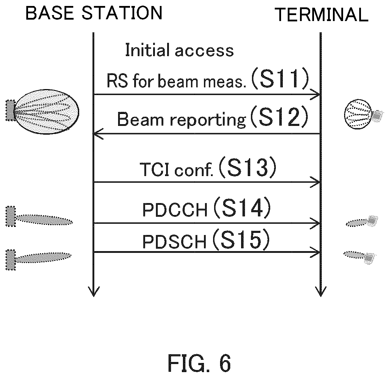

Referring to a sequence chart shown in FIG. 6, the process of beam management is described.

Base station 10 transmits CSI-RS for beam measurement, to terminal 20 (S11). Terminal 20 transmits, to base station 10, a beam report based on a result of the beam measurement (S12). Base station 10 transmits, to terminal 20, TCI (Transmission configuration information) configuration determined based on the beam report (S13). Base station 10 transmits a PDCCH signal (S14) and transmits a PDSCH signal (S15), to terminal 20.

### <<CSI-RS Configuration>>

A CSI-RS configuration related to S11 in FIG. 6 is described. Both SSB and CSI-RS may be used for beam management. In the case where CSI-RS is used for beam management, an RRC (Radio Resource Control) parameter that indicates that repetition of beam sweeping is ON or OFF may be supported.

### <<Beam Reporting)>>

Beam reporting related to S12 of FIG. 6 is described. Based on the beam report, a beam group and/or non-group may be supported. An SSB index and/or a CSI-RS resource index, and an L1-RSRP report may be supported.

### «Beam Indication and sQCL (spatial Quasi-Co-Location) Indication»

Beam indication related to S13 of FIG. 6 is described. M TCI statuses may be configured to be UE-specific for the sake of sQCL indication by RRC or beam indication. Note that in the case of RS resource beam indication, the sQCL configuration may be provided by RRC through TCI. In the case of PDSCH, MAC CE (MAC (Media Access Control) Control Element) of DCI + 3-bit TCI field may be used to select one among M TCI statuses for sQCL indication. In the case of PDCCH, K TCI statuses may be configured for each CORESET by the RRC. In a case where K > 1 for sQCL indication, MAC CE may activate one of K TCI statuses.

### <Antenna Panel>

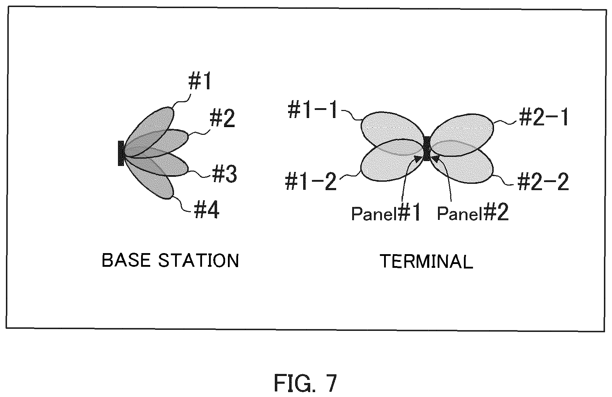

As illustrated in FIG. 7, terminal 20 can include a plurality of antenna panels each transmitting and receiving the beam. Note that the representation "antenna panels" is an example. Alternatively, any representation may be adopted only with one or more antennas or signal resources that can transmit and receive a signal. Terminal 20 including the plurality of antenna panels may be terminal 20 suitable for NR (FR (Frequency Range)2). FR2 may range from 24.25 to 52.6 GHz.

For example, as illustrated in FIG. 7, terminal 20 includes antenna panel #1 that transmits and receives a beam in a first direction, and antenna panel #2 that transmits and receives a beam in a second direction. As illustrated in FIG. 7, the first direction and the second direction may be in directions apart from each other. As illustrated in FIG. 7, antenna panel #1 can transmit and receive beams #1-1 and #1-2, and antenna panel #2 can transmit and receive beams #2-1 and #2-2. In this case, for identical antenna panel #1, terminal 20 may be capable of switching from beam #1-1 to beam #1-2 or from beam #1-2 to beam #1-1. Likewise, for identical antenna panel #2, terminal 20 may be capable of switching from beam #2-1 to beam #2-2 or from beam #2-2 to beam #2-1. This beam switching requires a prescribed time period. Note that the transmission and reception antennas or the transmission and reception panels are not necessarily common. Note that the number of transmission and reception antennas or the number of transmission and reception panels is not necessarily the same.

In addition to the beam switching described above, terminal 20 may switch the antenna panel. For example, terminal 20 may be capable of switching from beam #1-1 or #1-2 of antenna panel #1 to beam #2-1 or #2-2 of antenna panel #2. Likewise, terminal 20 may be capable of switching from beam #2-1 or #2-2 of antenna panel #2 to beam #1-1 or #1-2 of antenna panel #1. There is a possibility that the antenna panel switching requires a longer time period than the beam switching does. For example, a case can be considered where for the sake of battery saving, terminal 20 turns off an unused antenna panel. In this case, if a time period required to turn on the OFF state antenna panel is also included, there is a possibility that delay due to antenna panel switching is longer than that due to beam switching.

### <Antenna Panel Switching by Terminal>

As illustrated in the example in FIG. 2, a case where DCI indicates A-CSI-RS is discussed. In this case, in terminal 20 including the plurality of antenna panels, the following situations can be considered. That is, a situation can be considered where the beam applied to DCI reception (and the antenna panel related to this beam) is different from the beam applied to A-CSI-RS reception (and the antenna panel related to this beam). If the beam switching time length is insufficient, there is a possibility that terminal 20 cannot appropriately receive A-CSI-RS. If the antenna panel used for A-CSI-RS reception is in the OFF state and the antenna panel ON state time length is insufficient, and there is a possibility that terminal 20 cannot appropriately receive A-CSI-RS.

To solve the above problem, (1) a method of securing the ON state of the antenna panel, and (2) an operation of terminal 20 in a case where the antenna panel cannot be brought into the ON state are hereinafter described. Furthermore, as for (1) described above, (1a) a method of indicating the ON state of the antenna panel for terminal 20, and (1b) a method of avoiding the OFF state of the antenna panel through scheduling by base station 10 and required technical specifications are described.

### <(1) Method of Securing ON State of Antenna Panel>

### <(la) Method of indicating ON state of antenna panel for terminal>

A timing (impermissible) when the antenna panel cannot be turned off may be configured in terminal 20. That is, terminal 20 may set the timing when change to an antenna panel disabled state is impermissible. Alternatively, a timing (permissible) when the antenna panel can be turned on may be configured in terminal 20. That is, terminal 20 may configure the timing when change to an antenna panel enabled state is permissible. Such configuration may be achieved by any of the following (A1) to (A3), or by a combination of at least two of them, for example.
(A1) In a case where the timing is periodic, base station 10 may performs signaling of the period, and a part of or the entire offset of the timing.
(A2) Base station 10 may semi-statically or dynamically notify terminal 20 of the timing. Information related to the timing may be included in TCI.
(A3) An (impermissible) interval (duration) during which the antenna panel cannot be turned off may be configured in terminal 20. That is, terminal 20 may configure the interval (duration) during which change to the antenna panel disabled state is impermissible. Alternatively, an (permissible) interval (duration) during which the antenna panel can be turned on may be configured in terminal 20. That is, terminal 20 may configure the interval (duration) during which change to the antenna panel enabled state is permissible. The interval may be defined as the start position and the interval length of the interval. This interval may be defined periodically or triggered through NW (Network).

According to the above processing, the antenna panel can secure the ON state during reception of A-CSI-RS. Consequently, terminal 20 can appropriately receive A-CSI-RS.

### <(1b) Method of Avoiding OFF State of Antenna Panel through Scheduling by Base Station and Required Technical Specifications>

Terminal 20 may notify base station 10 of capability information on this terminal 20. Base station 10 may schedule DCI indication and A-CSI-RS based on the capability information so as to allow terminal 20 to receive A-CSI-RS. Terminal 20 may notify the capability information through the following (B1) and/or (B2).

### (B1)

Terminal 20 may notify base station 10 of the interval length of switching (turning on) the required antenna panel (hereinafter referred to as "panel switching interval length") as the capability information. Alternatively, terminal 20 may notify base station 10 of a value representing switching frequency per unit time between the ON state and the OFF state of the antenna panel, as the capability information.

The panel switching interval length may be specified in units of slots or units of symbols. Alternatively, the panel switching interval length may be specified by an absolute time or time period. The panel switching interval length may be specified independently for each SCS (Subcarrier Spacing). One slot length or one symbol length may be different with respect to each SCS. The capability information is not necessarily, explicitly defined as the panel switching interval length. For example, the panel switching interval length may be defined as a time interval (for example, a symbol time period) between different physical signals or channels. For example, the length may be defined by the time interval between the symbol including DCI and the symbol including A-CSI-RS.

### (B2)

Terminal 20 may notify base station 10 of the configuration of the antenna panels of this terminal 20 (hereinafter referred to as "panel configuration") as the capability information.

The capability information related to the panel configuration may include the following configuration information.
- The number of antenna panels that terminal 20 include.
- The configuration of the antenna port in each antenna panel. The configuration information may include information on the two-dimensional configuration and polarized wave.
- The number and/or combination of antenna panels allowed to be in simultaneously ON state. Or the number and/or combination of antenna ports allowed to be in simultaneously ON state.
- Association between the antenna panel and beam.

### <(2) Operation of Terminal When Antenna Panel Cannot Be In ON State>

If DCI scheduling is shorter than the time period of the ON state of the antenna panel, terminal 20 may operate as follows, during beam measurement and/or beam reporting.

### «Beam Measurement»

During beam measurement, terminal 20 may operate according to any of the following (C1) to (C4) or a combination of at least two of them.
(C1) Terminal 20 is not necessarily perform CSI measurement of resources. In this case, the behavior of base station 10 is not necessarily limited. For example, in a case where the time period between DCI and A-CSI reporting is shorter than the time period during which the antenna panel is in the ON state, CSI-RS measurement is not required for terminal 20. Alternatively, in a case where the time period between DCI and A-CSI reporting is shorter than the time period during which the antenna panel is in the ON state, terminal 20 may ignore DCI for CSI-RS measurement.
(C2) Terminal 20 may perform CSI measurement without panel switching.
(C3) The terminal may perform CSI measurement using the antenna panel having already been in the ON state.
(C4) In the case where the time period between DCI and A-CSI reporting is longer than the time period during which the antenna panel is in the ON state, terminal 20 is not necessarily expected to receive or configure DCI for triggering A-CSI-RS. In other words, in the case where the time period between DCI and A-CSI reporting is longer than the time period during which the antenna panel is in the ON state, base station 10 is not required to configure DCI for triggering CSI reporting. In this case, the behavior of base station 10 may be limited.

The case where the signal triggered by DCI is CSI-RS has thus been described above. However, a similar operation may also be applied to a case where the signal triggered by DCI is a physical signal and/or a channel that are other than CSI-RS. For example, in a case where PDSCH is triggered by DCI, terminal 20 may discard PDSCH or perform a process of receiving PDSCH without panel switching.

### «Beam Reporting»

During beam reporting, terminal 20 may operate according to any of the following (D1) to (D4) or a combination of at least two of them.
(D1) Terminal 20 may notify base station 10 that CSI measurement cannot have been performed. For example, for this notification, terminal 20 may use a resource for CSI reporting or a resource for ACK/NACK.
(D2) Terminal 20 may notify base station 10 that CSI measurement has not been performed, using an appropriate antenna panel. (for example, in the case of (C2) or (C3) described above).
(D3) Terminal 20 is not necessarily perform CSI feedback.
(D4) Terminal 20 is not necessarily perform CSI measurement, or CSI reporting. Alternatively, terminal 20 may perform CSI reporting without performing CSI measurement. In this case, terminal 20 is not required to update the CSI report, and may use the last CSI reporting, for example.

The case where the signal triggered by DCI is CSI-RS has thus been described above. However, a different operation may be adopted in a case where the signal triggered by DCI is a physical signal and/or a channel that are other than CSI-RS. For example, in the case where PDSCH is triggered by DCI, terminal 20 may return NACK.

### <<Case where the Number of Antenna Panels in Simultaneous ON State Is Limited>>

According to a certain circuit configuration of terminal 20, a case can be considered where in terminal 20, the number of antenna panels allowed to be in the simultaneously ON state is limited. Hereinafter, the number of antenna panels allowed to be in the simultaneously ON state is called "simultaneous ON limit number."

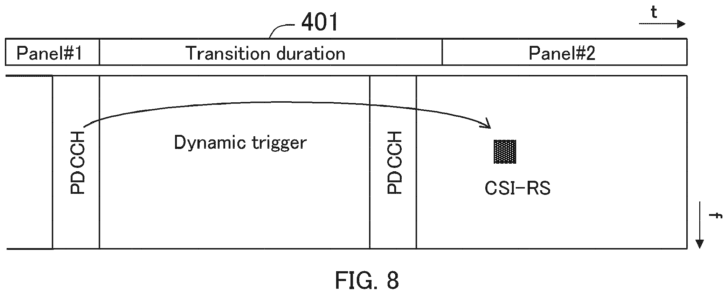

Next, referring to FIG. 8, a case is described where for terminal 20 that includes two antenna panels #1 and #2 and has the simultaneous ON limit number "1," A-CSI-RS is triggered by PDCCH (DCI) received through antenna panel #1, this A-CSI-RS being required to be received through another antenna panel #2. Note that the simultaneous ON limit number "1" is one example. In the embodiment of the invention, the simultaneous ON limit number may be two or more, and a triggering signal or a triggered signal is not necessarily DCI and A-CSI-RS.

In this case, as illustrated in FIG. 8, terminal 20 performs the following operation. That is, antenna panel #1 having received a PDCCH signal (DCI) is turned off, and subsequently antenna panel #2 in the OFF state is turned on. In this case, a situation can be considered where during transition interval 401 from antenna panel #1 coming into the OFF state to antenna panel #2 in the OFF state coming into the ON state, terminal 20 can receive no signal. Terminal 20 does not necessarily receive a physical signal or a channel during this transition interval 401. Terminal 20 may perform signaling, with the switching time period being regarded as UE Capability. The capability information is not necessarily, explicitly defined as the switching time period. For example, the panel switching interval length may be defined as a time interval (for example, a symbol time period) between different physical signals or channels.

<A-CSI Measurement Window>

### «Operation of Terminal in A-CSI Measurement Window»

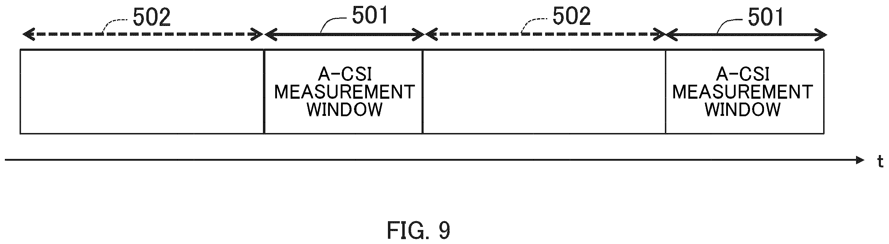

As illustrated in FIG. 9, it may be assumed that terminal 20 is configured from base station 10 to have A-CSI measurement window 501 indicating a time period for measuring A-CSI. It can be assumed that for terminal 20, A-CSI measurement window 501 may be periodically configured by the RRC (higher layer). Alternatively, terminal 20 may activate or deactivate A-CSI measurement window 501 from those set by RRC, using DCI or MAC CE, in a manner analogous to that of SP (Semi-Persistent)-CSI, for example.

It may be assumed that terminal 20 brings all the antenna panels into the ON state in A-CSI measurement window 501. It may be assumed that terminal 20 configures measurement of A-CSI in A-CSI measurement window 501.

### «Operation of Terminal Outside of A-CSI Measurement Window»

Outside of A-CSI measurement window 502, terminal 20 may operate according to any of the following (E1) to (E4) or a combination of at least two of them.
(E1) It may be assumed that terminal 20 is not required for CSI measurement, outside of A-CSI measurement window 502. For example, even if A-CSI is configured, terminal 20 may ignore the configuration. In this case, terminal 20 may notify base station 10 that CSI measurement cannot have been performed. In this case, terminal 20 is not necessarily perform CSI feedback.
(E2) It may be assumed that for terminal 20, A-CSI measurement is not configured by base station 10 outside of A-CSI measurement window 502. In this case, terminal 20 may notify base station 10 that CSI measurement cannot have been performed. In this case, terminal 20 is not necessarily perform CSI feedback.
(E3) When terminal 20 is configured for A-CSI measurement outside of A-CSI measurement window 502 by base station 10, A-CSI measurement may be performed in A-CSI measurement window 501 next time and thereafter.
(E4) When terminal 20 is configured for A-CSI measurement outside of A-CSI measurement window 502 by base station 10, A-CSI measurement is not necessarily performed and A-CSI reporting is not necessarily performed. Alternatively, when terminal 20 is configured for A-CSI measurement outside of A-CSI measurement window 502 by base station 10, A-CSI measurement is not necessarily performed and A-CSI reporting may be performed. In this case, terminal 20 is not necessarily required to update A-CSI reporting.

### <Modification 1>

Terminal 20 may report, to base station 10, the minimum time period (hereinafter referred to as "CSI reporting minimum time period") from DCI reception to A-CSI reporting, as capability information signaling. For example, terminal 20 may operate according to any of the following (F1) to (F3) or a combination of at least two of them.
(F1) Terminal 20 may report, to base station 10, the CSI report minimum time period (hereinafter referred to as "first minimum time period") in a case where no antenna panel state transition from OFF to ON occurs, and the CSI report minimum time period (hereinafter referred to as "second minimum time period") in a case where the antenna panel state transition from OFF to ON occurs, as capability information signaling. Note that it may be assumed that for terminal 20 and base station 10, "first minimum time period ≤ second minimum time period."
(F2) It may be assumed that terminal 20 does not cause the antenna panel state transition from OFF to ON in A-CSI measurement window 501. In this case, terminal 20 may assume a time period from DCI reception to A-CSI reporting (hereinafter referred to as "CSI report time period") as a value larger than the first minimum time period.
(F3) It may be assumed that terminal 20 does not cause the antenna panel state transition from OFF to ON outside of A-CSI measurement window. In this case, terminal 20 may assume that the CSI report time period as a value larger than the second minimum time period.

### <Remarks>

The embodiment of the invention is also applicable not only to downlink signal transmission and reception but also to uplink transmission and reception. In this case, the uplink signal and the uplink channel can be read as the downlink signal and the downlink channel in a mutual manner. Also in this case, uplink feedback information and downlink control signaling can be read as each other.

The above description has mainly been made assuming the NR channel and signaling scheme. Alternatively, the embodiment of the invention is also applicable to a channel and signaling scheme that have a function analogous to that of NR For example, this is applicable also to LTE and/or LTE-A.

The various signaling examples have been presented as described above. However, the examples are not limited to explicit methods. Notification may be implicitly made, or uniquely defined by specifications.

The various signaling examples have been presented as described above. However, the embodiments of the invention are not limited to the examples described above. For example, the embodiment of the invention may use signaling on a different layer, such as RRC, MAC CE or DCI. Alternatively, MIB (Master Information Block), SIB (System Information Block) or the like may be used. For example, RRC and DCI may be combined. RRC and MAC CE may be combined. All of the three may be combined.

In the above description, the representation of the beam or BF (Beam Forming) RS is adopted. It may be transparent from terminal 20 whether the physical signal or channel is beam-formed or not. Accordingly, the beam or BF RS may be called a signal or RS. The beam-formed RS may be called a RS resource. Beam selection may be read as resource selection. The beam index may be read as a resource index or an antenna port index.

The embodiment of the invention is also applicable to CSI measurement, channel sounding, and beam management. Furthermore, the embodiment of the invention is also applicable to link control, such as another beam control.

The RB (Resource Block) and subcarrier can be replaced with each other. Likewise, the slot and symbol can be replaced with each other.

The examples described above can be mutually combined. The characteristics of the examples described above can be mutually combined as various combinations. The embodiment of the invention is not limited to the specific combinations exemplified as described above.

The representation of antenna panel described above is only an example, and may also be represented in another way. For example, the antenna panel may be represented as the beam, spatial filter, RS resource, QCL, or TCI. The antenna panel may be represented according to a concept where these representations are grouped.

The embodiment of the invention indicates the example of beam switching for DCI and A-CSI-RS. However, the scope of disclosure is not limited to the combination of the physical signal and channel, and is also applicable to another physical signal or channel. For example, beam switching for DCI and PDSCH may be adopted.

### <Summary of Embodiment of Invention>

In the embodiment of the invention, the user terminal includes: a reception section that receives a signal (for example, a reference signal) through a second resource indicated by control information (for example, DCI) received through a first resource; and a control section that controls reception of the signal according to a time length between the first resource and the second resource.

According to this configuration, even if the first resource that receives the control information and the second resource that receives the signal indicated by the control information are different from each other, the user terminal can appropriately receive the signal through the second resource.

The embodiments of the disclosure has thus been described.

### (Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

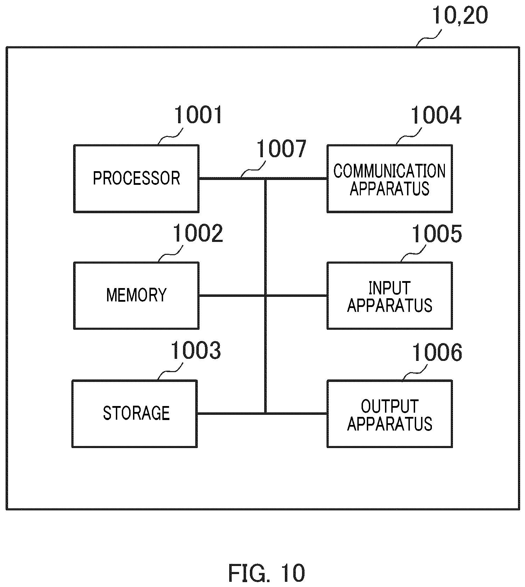

For example, base station 10, user terminal 20, and the like according to an embodiment of the present disclosure may function as a computer that executes processing of a radio communication method of the present disclosure. FIG. 10 illustrates an example of a hardware configuration of base station 10 and user terminal 20 according to an embodiment of the present disclosure. Base station 10 and user terminal 20 as described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of the base station and of the user terminal may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in the base station and the user terminal are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control sections 101 and 201, generation section 102, mapping section 104, extraction section 208, demapping section 206, transmission section 107, reception section 203 and the like, which have been described above, may be achieved by processor 1001. The required table may be stored in memory 1002.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, at least some of functional blocks that constitute base station 10 and user terminal 20 may be stored in memory 1002, and may be achieved by a control program operating in processor 1001. Likewise, the other functional blocks may be achieved in an analogous manner. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmission section 107, reception section 203, antennas 108 and 202, and the like as described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, base station 10 and user terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH (Physical Uplink Control Channel) and PDCCH (Physical Downlink Control Channel)) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station," "eNB," "cell," and "sector" can be interchangeably used in the present specification. The base station may be called a fixed station, a NodeB, an eNodeB (eNB), an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (for example, looking up in a table, a database or another data structure), ascertaining and the like. Also, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. The correction RS may be called a TRS (Tracking RS), a PC-RS (Phase Compensation RS), a PTRS (Phase Tracking RS), or an additional RS. The demodulation RS and the correction RS may be called by other corresponding names, respectively. The demodulation RS and the correction RS may be specified by the same name (for example, demodulation RS).

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, or the like) in the time domain.

The radio frame, the subframe, the slot, and the symbol indicate time units in transmitting signals. The radio frame, the subframe, the slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, or one slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The invention is solely defined by the appended claims 1-5.

### Industrial Applicability

An aspect of the present disclosure is useful for a radio communication system.

### Reference Signs List

1 Radio Communication System
10 Radio Base Station
20 User Terminal
100 Transmitter
101 Control Section
102 Generation Section
103 DFT Section
104 Mapping Section
105 IFFT Section
106 CP Insertion Section
107 Transmission Section
108 Antenna
200 Receiver
201 Control Section
202 Antenna
203 Reception Section
204 CP Removal Section
205 FFT Section
206 Demapping Section
207 IDFT Section
208 Extraction Section

## Claims

1. A user terminal, comprising:
a reception section that receives a signal in a second resource indicated by downlink control information, DCI, received in a first resource; and
a control section that controls reception of the signal according to a time length between the first resource and the second resource;
wherein the DCI indicates the presence or absence of a mapping of the signal, and a mapping destination;
wherein the signal received in the second resource is a channel status information reference sigfnal, CSI-RS, and the control section does not perform measurement of the CSI-RS when the time length between the first resource and the second resource is shorter than a time length required to change from a disabled state of an antenna panel to an enabled state.

2. The user terminal according to claim 1, wherein
signaling of a timing or a duration in which a disabled state of the reception is not permitted or a timing or a duration in which an enabled state of the reception is permitted is performed to the control section; wherein the timing is a timing when change to an antenna panel disabled state is impermissible.

3. The user terminal according to claim 1, wherein
the control section performs, to a base station, signaling of capability information of the user terminal related to the reception, and
the capability information is used for scheduling of the DCI for the first resource and scheduling of the signal for the second resource.

4. The user terminal according to claim 3, wherein
the capability information includes information indicating a time period required for change from a disabled state of the reception to an enabled state.

5. The user terminal according to claim 1, wherein
the control section notifies a base station of information indicating that the measurement of the reference signal is not performed.

## Patentansprüche

1. Benutzerendgerät, umfassend:
einen Empfangsabschnitt, der ein Signal in einer zweiten Ressource empfängt, die durch Downlink-Steuerungsinformation, DCI, angezeigt wird, die in einer ersten Ressource empfangen wird; und
einen Steuerungsabschnitt, der einen Empfang des Signals gemäß einer Zeitdauer zwischen der ersten Ressource und der zweiten Ressource steuert;
wobei die DCI die Anwesenheit oder Abwesenheit einer Zuordnung des Signals und einer Zuordnungsdestination anzeigt;
wobei das Signal, das Signal, das in der zweiten Ressource empfangen wird, ein Referenzsignal einer Kanalstatusinformation, CSI-RS ist, und
der Steuerungsabschnitt keine Messung des CSI-RS durchführt, wenn die Zeitdauer zwischen der ersten Ressource und der zweiten Ressource kürzer als eine Zeitdauer ist, die nötig ist, um von einem deaktivierten Status einer Antennentafel in einen aktivierten Status zu wechseln.

2. Benutzerendgerät nach Anspruch 1, wobei
Signalisieren eines Zeitablaufs oder einer Dauer, in dem (der) ein deaktivierter Status des Empfangs nicht erlaubt ist, oder eines Zeitablaufs oder einer Dauer, in dem (der) ein aktivierter Status des Empfangs erlaubt ist, an den Steuerungsabschnitt durchgeführt wird; wobei der Zeitablauf ein Zeitablauf ist, wenn ein Wechsel in einen deaktivierten Status der Antennentafel unzulässig ist.

3. Benutzerendgerät nach Anspruch 1, wobei
der Steuerungsabschnitt ein Signalisieren einer Fähigkeitsinformation des Benutzerendgeräts in Bezug auf den Empfang an eine Basisstation durchführt, und
die Fähigkeitsinformation zur Zeitplanung der DCI für die erste Ressource und Zeitplanung des Signals für die zweite Ressource verwendet wird.

4. Benutzerendgerät nach Anspruch 3, wobei
die Fähigkeitsinformation eine Information beinhaltet, die eine Zeitperiode anzeigt, die zum Wechseln von einem deaktivierten Status des Empfangs in einen aktivierten Status nötig ist.

5. Benutzerendgerät nach Anspruch 1, wobei
der Steuerungsabschnitt eine Basistation über eine Information benachrichtigt, die anzeigt, dass die Messung des Referenzsignals nicht durchgeführt wird.

## Revendications

1. Terminal utilisateur, comprenant :
une section de réception qui reçoit un signal dans une seconde ressource indiquée par des informations de commande de liaison descendante, DCI, reçues dans une première ressource ; et
une section de commande qui commande la réception du signal selon une longueur temporelle entre la première ressource et la seconde ressource ;
dans lequel les DCI indiquent la présence ou l'absence d'une mise en correspondance du signal, et une destination de mise en correspondance ;
dans lequel le signal reçu dans la seconde ressource est un signal de référence d'informations d'état de canal, CSI-RS, et
la section de commande ne réalise pas de mesure du CSI-RS lorsque la longueur temporelle entre la première ressource et la seconde ressource est plus courte qu'une longueur temporelle requise pour changer d'un état désactivé d'un panneau d'antenne à un état activé.

2. Terminal utilisateur selon la revendication 1, dans lequel
la signalisation d'une mesure temporelle ou d'une durée, durant laquelle un état désactivé de la réception n'est pas permis, ou d'une mesure temporelle ou d'une durée, durant laquelle un état activé de la réception est permis, à la section de commande est réalisée ; dans lequel la mesure temporelle est une mesure temporelle pendant laquelle un changement à un état désactivé de panneau d'antenne n'est pas permis.

3. Terminal utilisateur selon la revendication 1, dans lequel
la section de commande réalise une signalisation, à une station de base, d'informations de capacité du terminal utilisateur connexe à la réception, et
les informations de capacité sont utilisées pour l'ordonnancement des DCI pour la première ressource et l'ordonnancement du signal pour la seconde ressource.

4. Terminal utilisateur selon la revendication 3, dans lequel
les informations de capacité incluent des informations indiquant une période requise pour changer d'un état désactivé de la réception à un état activé.

5. Terminal utilisateur selon la revendication 1, dans lequel
la section de commande notifie, à une station de base, des informations indiquant que la mesure du signal de référence n'est pas réalisée.
